Europäisches Patentamt

European Patent Office

Office européen des brevets

(11) Publication number: **0 421 043 A1**

# EUROPEAN PATENT APPLICATION

(21) Application number: 89850281.0

(51) Int. Cl.⁵: **A01D 85/00**, A01D 90/00

(22) Date of filing: 05.10.89

(43) Date of publication of application:
**10.04.91 Bulletin 91/15**

(84) Designated Contracting States:
**AT BE CH DE ES FR GB GR IT LI LU NL SE**

(71) Applicant: **DE ROTTERDAMSCHE DROOGDOK
MAATSCHAPPIJ B.V.**
**P.O. Box 913**
**NL-3000 AX Rotterdam(NL)**

(72) Inventor: **Brunér, Hasse**
**Rackekärr P1 2018**
**SF-544 00 Hjo(SE)**
Inventor: **Donker,Hans**
**Bachstraat 26**
**NL-3335 CK Zwijndrecht(NL)**

(74) Representative: **Hynell, Magnus**
**Hynell Patenttjänst AB Box 236**
**S-683 02 Hagfors(SE)**

(54) A device in a crop material collecting container.

(57) The invention concerns a device in a crop material collecting container (1), which is designed to be hauled across a crop field and be equipped to be filled with a crop material, said crop material being fed at the top of (4) and in the front end of said container, said container comprising a packing device (11) as well as an actuator (12), which is designed to displace said packing device from the front end of the container to its rear end and conversely, in order to, by repeated such displacements, compress the crop material in the container. The invention is characterized therein that a canvas (14), which can be wound and unwound, is disposed in the container and substantially across the entire interior width of the container, in that said canvas with its one end (18) is fastened at the front end of the container and in that it with its other end is fastened in a roll (21), which also is disposed substantially across the entire width of the container and which is rotatably mcunted on said movable packing device, said canvas in this way being gradually unwound from said roll when said packing device is displaced to the rear end of the container, said crop material (15) being temporarily collected on said canvas during the displacement of the packing device in the container, the canvas being wound again on said roll, when the packing device is returned to the front end of the container, the crop material, which has been collected on the canvas, gradually falling from the canvas and behind the packing device.

EP 0 421 043 A1

Fig. 2.

## A DEVICE IN A CROP MATERIAL COLLECTING CONTAINER

TECHNICAL FIELD

The present invention relates to a device in a container for a crop material, which container is designed to be hauled across a field and to be filled with said crop material, said crop material being fed at the top of and in the front end of said container, which device comprises a packing device, which may be designed as a movable wall or the like, as well as an actuator, which is designed to displace said packing device from the front end of the container to its rear end and conversely, in order to, by repeated such displacements, compress said crop material in said container.

STATE OF THE ART

Such a device is known, e.g. through US-S-3 771 673. Similar devices, although they are not particularly designed to handle a crop material, are also known, through e.g. US-A-2 218 121 and US-A-2 298 982. Said devices have a common drawback, i.e. the container cannot, without problems, be filled when the harvesting machine is in its running action, since the crop material would then fall into the space between the front wall of the container and said packing device, when the latter is disposed more at the back of the container. Consequently, the harvesting machine or the like must be stopped in the field and the harvesting be discontinued, when the packing of the crop material is done.

BRIEF DESCRIPTION OF THE INVENTION

The purpose of the invention is to eliminate the above mentioned problems and to be able to perform the packing while the harvesting machine is running and the harvesting of the crop material from the field is continued. This purpose and other purposes can be attained by means of what is set forth in the characterizing clauses of the following patent claims.

Furthermore, additional characterizing features, aspects of and ad vantages of the present invention are set forth in the following description of a preferred embodiment.

BRIEF DESCRIPTION OF THE DRAWINGS

In the following text the present invention will be explained in greater detail, reference being made to the accompanying drawings, in which
Fig. 1 is a lateral view of a harvesting machine provided with a container,

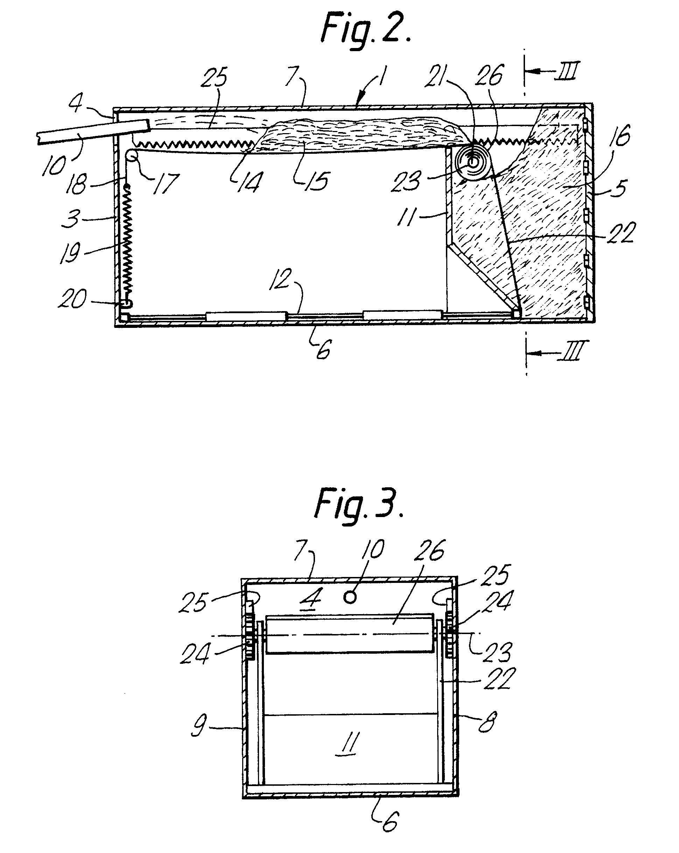

Fig. 2 shows a longitudinal section of a container, equipped according to the invention, and
Fig. 3 is a view III-III in Fig. 2, but the collected crop material has been left out in order to show more clearly how the device is designed.

DESCRIPTION OF A PREFERRED EMBODIMENT

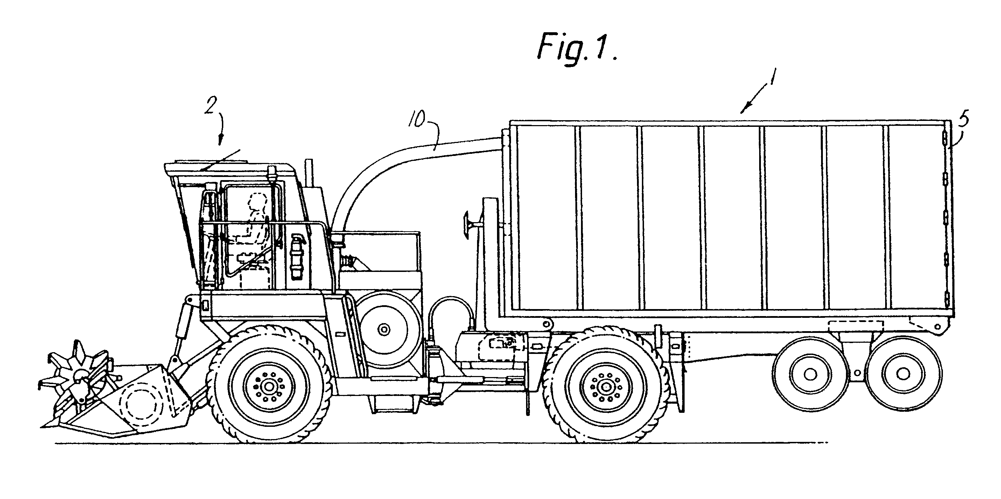

A container, generally indicated by reference numeral 1, can be positioned on a carrier on a harvesting machine 2 according to Fig. 1 or be positioned on a trailer. The container has a front wall 3 and a opening 4 in the upper portion of wall 3, a rear wall 5, which comprises two doors, which can be opened, a bottom portion 6, a cover 5, and two side walls 8, 9. Container 1 has a parallelipipedal shape. The crop material is blown into container 1 by means of a blower pipe 10 through front upper opening 4. In order to pack or compress the crop material in the container a packing device, designed as a movable wall 11, is used. Wall 11 is disposed transverly to the container between its interior walls 8, 9. Packing device 11 can be displaced from front wall 3 towards rear wall 5 and conversly by means of an actuator, generally indicated by reference numeral 12. Actuator 12 may comprise series of hydraulic cylinders. Actuator 12 suitably is designed according to WO 87/05081.

A canvas 14 is disposed in container 1, designed to temporarily collect crop material 15 on top of canvas 14 during the packing process. Packed crop material 16 is collected in the rear portion of container 1. Canvas 14 is made of a reinforced plastic material. The width of canvas 14 is roughly the same as the interior width of container 1, i.e. canvas 14 is disposed between side walls 8, 9 of container 1 and its length is at least the same as the length of the container. As to its front portion canvas 14 is disposed over a horizontally disposed pulley wheel 17 close to front wall 3 and is, in its front end 18, below pulley wheel 17, fastened to a few tension springs 19, which are fastened to fastening means 20 on the interior side of front wall 3. On the rear side of packing device/movable wall 11 a collecting roll 21 for canvas 14 is disposed. Roll 21 is mounted in bearings in side walls or brackets 22 on packing device 11 and in the ends of a rotational shaft 23 of roll 21 a gear wheel or cog wheel 24 is disposed gear rack 25, which is mounted on the interior side of the respective side walls 8, 9 and which extends along the entire length of the container. A portion of canvas 14 is wound on roll 21. The diameter of gear wheels 24 is larger than the maximum diameter of collected canvas roll 26.

The device described above is designed to be used in the following manner. In its normal front position packing device 11 is disposed adjacent to front wall 3. Crop material is then blown through pipe 10 into the container behind packing device 11. When the collected crop material is to be loaded, which is done during a continuous running action of the harvesting machine and a continuous collection of crop material, packing device 11 is displaced to the rear by means of actuator 12. Canvas 14 will then be unwound from roll 21. Due to the fact that gear wheels 24 have a slightly larger diameter than the diameter of the collected canvas roll 26, canvas 14 will be stretched, because packing device 11 is displaced to the rear at a slightly greater speed than the speed with which said canvas 14 forcibly is unwound from roll 21, due to the difference in diameter between gear wheels 24 and wound canvas roll 26. Thus, canvas 14 is stretched and said difference is compensated thanks to a stretching of springs 19. Crop material which is now fed into the container through blower pipe 10 will, to a large extent, come down on stretched canvas 14 (crop material 15).

When material 16 has been packed in the rear portion of the container, packing device/movable wall 11 will be brought back to its starting point, said canvas being forcibly wound on roll 21 due to the rotation of gear wheels 24 thanks to their meshing with gear racks 25. Simultaneously springs 19 slacken to the same degree as they were stretched during the packing step. Crop material 15 which has been collected on canvas 14 will gradually fall behind collected canvas roll 26 behind said packing device, i.e. on top of and/or in front of already compressed crop material 16.

## Claims

1. A device in a crop material collecting container (1), which is designed to be hauled across a crop field and be equipped to be filled with a crop material, said crop material being fed at the top of (4) and in the front end of said container, said container comprising a packing device (11) as well as an actuator (12), which is designed to displace said packing device from the front end of the container to its rear end and conversely, in order to, by repeated such displacements, compress the crop material in the container, **characterized** in that a canvas (14), which can be wound and unwound, is disposed in the container and substantially across the entire interior width of the container, in that said canvas with its one end (18) is fastened at the front end of the container and in that it with its other end is fastened in a roll (21), which also is disposed substantially across the entire width of the container and which is rotatably mounted on said movable packing device, said canvas in this way being gradually unwound from said roll when said packing device is displaced to the rear end of the container, said crop material (15) being temporarily collected on said canvas during the displacement of the packing device in the container, the canvas being wound again on said roll, when the packing device is returned to the front end of the container, the crop material, which has been collected on the canvas, gradually falling from the canvas and behind the packing device.

2. A device according to claim 1, **characterized** in that said canvas in its stretched-out position roughly is horizontally disposed but sags somewhat due to its weight of the crop material collected on the canvas.

3. A device according to claim 2, **characterized** in that said canvas in the front portion of the container is disposed at a level, which substantially corresponds to the height of the packing device.

4. A device according to claim 3, **characterized** in that said container is provided with a cover (7), the height of said packing device being somewhat lower than the level of the cover above the bottom portion of the container.

5. A device according to claim 3 or 4, **charaterized** in that said canvas is stretched around a pulley wheel (17) in the front end of the container, which pulley wheel is disposed at said level, and in that the stretched condition of the canvas is maintained by means of one or several springs (19), which are disposed below said pulley wheel.

6. A device according to claim 5, **characterized** by means (24, 25) designed to forcibly unwind said canvas from said roll (21) on said packing device, when the packing device is displaced towards the rear portion of said container, at a speed, which is somewhat lower than the speed, with which said packing device is displaced to the rear of the container, the difference being compensated by the stretch of said springs (19) in the front end of the container.

7. A device according to claim 6, **characterized** in that said means (24, 25) comprise two gear wheels or cog wheels (24), which are disposed in the respective ends of said roll, as well as two respective gear racks (25) on the respective long sides (8, 9) of the container, which racks are designed to mesh with the respective gear wheels or cog wheels.

Fig.1.

EP 0 421 043 A1

# Fig.2.

# Fig.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-3751892 (QUANBECK)<br>* column 2, line 39 - column 10, line 6; figures 1-11 * | 1 | A01D85/00<br>A01D90/00 |
| Y | US-A-3911654 (DARNALL)<br>* column 11, line 66 - column 13, line 11; figures 1-24 * | 1 | |
| A | | 2, 5, 6, 7 | |
| | | | TECHNICAL FIELDS SEARCHED (Int. Cl.5 ) |
| | | | A01D |

The present search report has been drawn up for all claims

| Place of search | Date of completion of the search | Examiner |
|---|---|---|
| THE HAGUE | 28 MAY 1990 | VERMANDER R.H. |